# EUROPÄISCHE PATENTSCHRIFT

(11) **EP 2 581 024 B1**
(45) Veröffentlichungstag und Bekanntmachung des Hinweises auf die Patenterteilung: **20.01.2016**
(21) Anmeldenummer: 12187822.7
(22) Anmeldetag: 09.10.2012
(51) Int. Cl.: A47L 9/24, F16L 11/15, F16L 11/16

(54) **Schlauchleitung mit überdeckenden Zungen, insbesondere für einen Staubsauger**
Hose with overlapping tongues, in particular for a vacuum cleaner
Tuyau flexible avec languette recouvrante, notamment pour un aspirateur

(30) Priorität: 10.10.2011 DE 102011084197
(43) Veröffentlichungstag der Anmeldung: 17.04.2013
(73) Patentinhaber: BSH Hausgeräte GmbH, 81739 München (DE)
(72) Erfinder: Flegler, Alexander, 97616 Bad Neustadt (DE); Hasheminia, Mahbiz, 97523 Schwanfeld (DE); Schmitt, Florian, 97702 Münnerstadt (DE)

(56) Entgegenhaltungen:
- EP-A2- 1 407 707
- WO-A1-2010/086819

## Beschreibung

### Gebiet der Erfindung

Die Erfindung betrifft eine Schlauchleitung mit einer in Längsrichtung gewellten, innere Wellentäler aufweisenden Wandung, insbesondere zur Verwendung als Saugschlauch an einem Staubsauger, wobei im Bereich der inneren Wellentäler zur pneumatischen und/oder hydraulischen Glättung der Schlauchleitung eine Barriere in Form von einander gegenüberliegend in Richtung des Wellental auskragenden und das Wellental überdeckenden Zungen vorgesehen ist, sowie einen mit einer derartigen Schlauchleitung ausgestatteten Staubsauger.

### Hintergrund der Erfindung

Staubsauger dienen der Aufnahme von Verschmutzungen von Bodenflächen, Möbeln oder dergleichen durch einen Saugluftstrom. Hierzu wird der Saugmund einer Saugdüse auf die zu reinigende Oberfläche aufgesetzt, so dass Staub oder andere Verschmutzungen vom Saugluftstrom angesaugt werden. Der Saugluftstrom wird durch ein Sauggebläse erzeugt, welches mit einer Staubabscheideeinrichtung, beispielsweise einem Fliehkraftabscheider oder einem Staubfilterbeutel, in Strömungsverbindung steht. Die von der Saugdüse aufgenommenen Schmutzpartikel werden in der Staubabscheideeinrichtung gesammelt, während die gereinigte Luft an die Umgebung abgegeben wird. Der Saugmund einer für die Bodenreinigung geeigneten Saugdüse weist üblicherweise eine rechteckige Gestalt auf und erstreckt sich quer zur Schieberichtung. Dabei ist es wünschenswert, dass über die gesamte Breite des Saugmunds ein homogener Unterdruck anliegt, um ein gleichmäßiges Saugergebnis zu erzielen. Um die Leistung des Sauggebläses besonders wirksam nutzen zu können, ist ferner ein möglichst geringer Druckverlust zwischen Saugmund und Sauggebläse vorteilhaft.

Das Sauggebläse und die Staubabscheideeinrichtung können beispielsweise an einem Schubrohr befestigt sein, das bei normalem Betrieb unmittelbar mit der Saugdüse verbunden ist und in der Regel auch einen Teil des Strömungskanals zwischen Saugdüse und Sauggebläse ausbildet (Stielstaubsauger). Bei solchen Staubsaugern kann als gesonderter Ausstattungsteil zur Bewältigung besonderer Saugaufträge temporär und stromauf des Sauggebläses anstelle der Saugdüse ein flexibler Saugschlauch angesetzt werden, beispielsweise zum Aussagen tiefer Spalte. Nach einer anderen üblichen Bauform sind das Sauggebläse und die Staubabscheideeinrichtung im Gehäuse eines gesonderten Aggregateträgers angeordnet, der mittels eines Fahrwerks über die Bodenfläche bewegt werden kann und mit dem in die Saugdüse eingesteckten Schubrohr durch einen flexiblen Saugschlauch strömungsverbunden ist (Kanisterstaubsauger). Bei dieser Ausbildung weist der Saugschlauch in der Regel eine Länge von 1 600 mm bis 2 000 mm und einen äußeren Durchmesser von 30 mm bis 50 mm auf.

Die flexiblen Saugschläuche derartiger Staubsauger sind üblicherweise als Wellschläuche ausgeführt, die im Längsschnitt eine wellenförmige Kontur aufweisen, welche den Schläuchen in axialer Richtung sowie bei Biegung um ihre Längsachsen eine erhebliche Flexibilität verleihen kann.

Nach einem ersten üblichen Herstellverfahren werden derartige Wellschläuche aus Kunststoff dadurch gefertigt, dass zunächst mittels eines Extruders und einem entsprechenden Extrusionswerkzeug aus einer Kunststoffschmelze ein glattes Schlauchprofil geformt wird. Nachfolgend wird der noch heiße Schlauch in einen Korrugator eingeführt, der in Extrusionsrichtung bewegbare Ketten aufweist. Die Kettenglieder sind mit quer zur Extrusionsrichtung verlaufenden, wellenartigen Vertiefungen ausgestattet, in welchen die noch plastisch verformbare Kunststoffmasse des Schlauches durch Anlegen eines Überdrucks im Rohrinneren und/oder eines Unterdrucks im Bereich der Kettenglieder eingepresst wird. Nach dem Abkühlen wird diese Wellenkontur dauerhaft im Schlauch eingefroren, wodurch dieser im späteren Gebrauch seine gewünschte Biegsamkeit erhält.

Bei einem weiteren üblichen Herstellverfahren wird mittels eines Extruders und eines Extrusionswerkzeugs aus einer Kunststoffschmelze ein endloser, flacher Profilstrang ausgeformt, dessen Querschnitt einerseits eine wellenförmige Kontur und andererseits randseitig einen Verbindungsbereich aufweist. Dieser Profilstrang wird nachfolgend helixförmig zu einem Schlauch gewickelt, wobei der Verbindungsbereich am ersten Rand des Profilstrangs in einem Stoßbereich stets mit dem Verbindungsbereich am gegenüberliegenden zweiten Rand des Profilstrangs verbunden wird. Die Verbindung kann beispielsweise formschlüssig durch Verrasten oder aber stoffschlüssig durch Verschweißen oder Verkleben erfolgen.

Grundsätzlich ist es auch möglich, den Wellschlauch aus einer Vielzahl vorgeformter, insbesondere spritzgegossener Ringelemente zusammenzusetzen, die im Längsschnitt eine wellenförmige Kontur und an ihren axialen Enden einen Verbindungsbereich aufweisen. Auch in diesem Fall kann die Verbindung beispielsweise formschlüssig durch Verrasten oder aber stoffschlüssig durch Verschweißen oder Verkleben erfolgen.

Sofern derartige Wellschläuche zur Strömungsführung von Fluiden eingesetzt werden, weisen sie grundsätzlich den Nachteil auf, dass die in ihre Innenwandung eingeformten Wellentäler Turbulenzen in der Fluidströmung erzeugen und damit einen erhöhten Druckverlust hervorrufen. Bei einem Staubsauger führt dies zu einer Verminderung des Saugluftvolumenstroms, die aus ergonomischen und ökonomischen Gründen nur bedingt durch eine Erhöhung der Gebläseleistung oder des Schlauchdurchmessers kompensiert werden kann. Da der Saugluftvolumenstrom in direktem Zusammenhang mit der gemessenen Staubaufnahme steht, wird das Saugverhalten durch diesen Druckverlust beeinträchtigt. Die Turbulenzen können ferner zu einer erhöhten Geräuschentwicklung führen. Darüber hinaus ist es möglich, dass sich in den Wellentälern Staub und andere Verschmutzungen ablagern, die mit vertretbarem Aufwand kaum mehr zu entfernen sind.

Aus der internationalen Patentanmeldung WO 2010/086819 A1 ist ein flexibler Schlauch der eingangs genannten Art zur Verwendung als Saugschlauch bei Staubsaugern bekannt, durch dessen Einsatz diese Nachteile vermieden werden sollen. Dieser Saugschlauch wird in der zuvor beschriebenen Weise aus einem endlos extrudierten, schraubenförmig gewickelten Profilstrang gefertigt, wobei an dem Profilquerschnitt an einem Rand eine erste Zunge und am gegenüberliegenden Rand eine zweite Zunge vorgesehen ist, welche nach dem Aufwickeln des Profils gemeinsam eine Fluidbarriere vor dem Wellental der inneren Schlauchwandung erzeugen und dieses hydraulisch oder pneumatisch glätten sowie Staubablagerungen im Wellental entgegenwirken. Da die zusammenwirkenden Zungen nicht starr miteinander verbunden sind, sondern einander nur überlappen, wird die Flexibilität des Wellschlauchs durch diese Ausbildung nur unwesentlich beeinflusst. Die Zungen sind dabei beispielsweise zueinander derart komplementär keilförmig oder gekrümmt verlaufend ausgeformt, dass der Verschluss des Wellentals auch bei einer Biegung des Saugschlauchs im Wesentlichen aufrecht erhalten wird.

Der aus dem Stand der Technik bekannte Saugschlauch ist zwar hinsichtlich seiner hydraulischen oder pneumatischen Glätte verbessert, das Eindringen von Staub in die Wellentäler kann durch die aufeinander gleitenden Zungen bei längerem Gebrauch jedoch nicht ausgeschlossen werden.

Die europäische Patentanmeldung EP 1 407 707 A2 offenbart einen ähnlichen gewickelten Saugschlauch mit gewellter Wandung, bei welchem die Barriere aber aus nur einer an den Profilstrang auskragend angeformten, dickwandigen Zunge besteht, die nachfolgend das Wellental teilweise abdeckt. Der Schlauch versteift sich infolge Biegung bei dieser Ausbildung sprunghaft, sobald die Zunge an die gegenüberliegende Wandung des Wellentals anstößt. Ferner ist diese Ausführung hinsichtlich pneumatischer Glätte und Staubablagerung weniger günstig.

In der deutschen Gebrauchsmusterschrift DE 20 2009 009 809 U1 wird ein Schlauch zum Fördern von gasförmigen oder flüssigen Medien beschrieben, der aus einem gewellten Außenschlauch und einem inneren, glatten und an den Wellenbergen des Außenschlauchs anliegenden Innenschlauch besteht. Durch diese Ausbildung werden zwar Turbulenzen in der Fluidströmung verringert, aber auch die Flexibilität des Schlauchs beeinträchtigt. Ferner erfordert das Einbringen und Befestigen des Innenschlauches einen gesonderten Fertigungsschritt.

In der Patentanmeldung US 2004/0096616 A1 wird ferner ein aus einem helixförmigen Profilstang gewickelter, gewellter Saugschlauch offenbart, bei welchem der Profilstang einen einstückig angeformten Hohlprofilbereich mit quadratischem Querschnitt aufweist. Die Wanddicke dieses Hohlprofilbereichs entspricht der relativ großen Wanddicke des übrigen Profilstangs und ist somit relativ steif. In den Hohlprofilbereich ist ferner ein diesen im Wesentlichen ausfüllendes elektrisches Kabel eingefügt, so dass dieser in mit Bezug auf die Längsachse des Saugschlauchs axialer Richtung praktisch keine Kompressibilität aufweist. Um die Flexibilität des Saugschlauch möglichst wenig zu beeinträchtigen, füllt der steife Hohlprofilbereich daher nur ein geringen Teil des inneren Wellentals aus und bewirkt damit keine nennenswerte pneumatische Glättung des Saugschlauchs, sondern dient nur der Übertragung elektrischer Energie zwischen beiden Enden des Saugschlauchs.

### Der Ereindung zugrundeliegende Aufgabe

Der Erfindung liegt die Aufgabe zugrunde, bei einer Schlauchleitung mit einer in Längsrichtung gewellten, innere Wellentäler (24) aufweisenden Wandung,die im Bereich der inneren Wellentäler (24) zur pneumatischen oder hydraulischen Glättung der Schlauchleitung eine Barriere aufweist, die Barrierewirkung gegenüber dem Stand der Technik insbesondere mit Blick auf die Ablagerung von Staub und anderen Verschmutzungen weiter zu verbessern und damit einer Beeinträchtigung der Funktion insbesondere bei langem Gebrauch entgegen zu wirken. Außerdem soll eine gute hydraulische und/oder pneumatische Gläätung erreicht werden. Die Schlauchleitung soll einfach und preiswert herstellbar sein. Außerdem liegt der Erfindung die Aufgabe zugrunde, einen verbesserten Staubsauger mit einem Saugschlauch bereitzustellen

### Erfindungsgemäße Lösung

Die Bezugszeichen in sämtlichen Ansprüchen haben keine einschränkende Wirkung, sondern sollen lediglich deren Lesbarkeit verbessern.

Die Lösung der gestellten Aufgabe gelingt durch eine Schlauchleitung mit den Merkmalen des Anspruchs 1 und einen Staubsauger mit den Merkmalen des Anspruchs 10.

Zur Lösung der Aufgabe ist somit eine Schlauchleitung mit einer in Längsrichtung gewellten, innere Wellentäler aufweisenden Wandung geeignet, bei welcher im Bereich der inneren Wellentäler zur pneumatischen und/oder hydraulischen Glättung der Schlauchleitung eine Barriere in Form von einander gegenüberliegend in Richtung des Wellental auskragenden und das Wellental überdeckenden Zungen vorgesehen ist, wobei die freien Enden der Zungen unter elastischer Vorspannung stumpf aufeinander stoßend ausgebildet sind. Zur Lösung der Aufgabe ist ferner ein Staubsauger geeignet, welcher einen Saugschlauch in Form einer derartigen Schlauchleitung aufweist.

Unter einem stumpfen Stoß im Sinne dieser Erfindung ist zu verstehen, dass die Endkante einer Zunge auf die Endkante oder alternativ eine flächige Seite einer Zunge stößt, sodass die beiden Zungen in linienförmigem Kontakt stehen. Wenn die Endkanten aufeinanderstoßen, ist es nicht notwendig, dass die Zungen in gerader Flucht verlaufenden. Vielmehr können die Zungen auch geneigt zueinander in einem Winkel ausgerichtet sein. Erfindungswesentlich ist nur, dass sich die freien Enden der Zungen nicht flächig überlappen und damit flächig aneinander gleitend vorgesehen sind, sondern dass die Endkante einer Zunge auf der Fläche oder der Endkante der anderen Zunge in linienförmigem Kontakt zum Liegen kommt, und auch bei einem Krümmen der Schlauchleitung in linienförmigem Kontakt verbleiben können. Dabei ist nicht ausgeschlossen, dass sich konstruktionsbedingt die Endkante der einen Zunge auf der Fläche der anderen Zunge verlagert, solange nur sichergestellt ist, dass die beiden Zungen in linienförmigem Kontakt verbleiben.

Es ist im Zusammenhang mit dieser Erfindung unerheblich, ob ein Merkmal auf ein oder mehrere Wellentäler und/oder Zungenpaare gerichtet ist. Bei einem Saugschlauch mit zueinander axial versetzen, ringförmig umlaufenden Wellen liegt eine große Anzahl von Wellentälern vor, während die Anzahl der Wellentäler bei einer gewickelten Schlauchleitung von der Anzahl der Wellen im Profilstrang abhängt. Somit weist ein gewickelter Wellschlauch je nach Ausbildung des Profilstrangs nur ein helixförmiges Wellental oder aber wenige, ineinander schraubenförmig gewundene Wellentäler auf. Die Bezeichnung "Wellentäler" umfasst im Sinne der Erfindung also auch den Spezialfall nur eines "Wellentals".

Es ist ein erreichbarer Vorteil der Erfindung, dass die Barrierewirkung im Wellental verbessert wird, ohne dass die Flexibilität der Schlauchleitung - auch bei größerer Biegung - nennenswert beeinträchtigt wird. Die stumpf aufeinander stoßenden freien Enden der Zungen liegen vielmehr in der ungekrümmten Schlauchleitung unter elastischer Vorspannung derart aneinander an, dass die krümmungsinneren Zungen bei Biegung der Schlauchleitung weiter elastisch gespannt werden, werden die Vorspannung in den krümmungsäußeren Zungen dafür sorgt, dass auch deren freien Enden trotz einer Verbreiterung des abzudeckenden Wellentals noch dichtend aneinander liegen.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Nach einer ersten bevorzugten Ausbildung besteht die Schlauchleitung aus einem helixförmig gewickelten Profilstrang. Eine derartige Schlauchleitung kann zum Beispiel mit besonders geringem Aufwand durch Extrudieren eines endlosen Profilsstrangs aus Kunststoff und nachfolgendes Wickeln besonders ökonomisch gefertigt werden.

Wenn der Profilstrang helixförmig zu einem Schlauch gewickelt wird, wird ein Verbindungsbereich am ersten Rand des Profilstrangs in einem Stoßbereich vorzugsweise mit dem Verbindungsbereich am gegenüberliegenden zweiten Rand des Profilstrangs verbunden. Die Verbindung kann beispielsweise formschlüssig, z.B. durch Verrasten, oder aber stoffschlüssig, z. B. durch Verschweißen oder Verkleben, vorzugsweise mit Heißklebstoff, erfolgen. In einer bevorzugten Ausführung der erfindungsgemäßen Schlauchleitung weist der Profilstrang einen Schenkel und eine Lasche auf, wobei der Schenkel einer Windung sich mit der Lasche einer benachbarten Windung in Anlage befindet und mit dieser fest verbunden ist.

Bei einer alternativen Ausbildung ist angedacht, dass die Schlauchleitung aus aneinandergefügten, vorzugsweise durch Spritzgießen aus Kunststoff geformten Ringelementen besteht. Der nachfolgende Montageaufwand zur Erzeugung der Schlauchleitung wird durch diese Ausbildung zwar vergrößert, dafür können in die Schlauchleitung jedoch lokal auch Ringelemente mit besonderen Ausstattungsmerkmalen eingefügt werden. Beispielsweise können Ringelemente unterschiedlicher Farbe aneinandergefügt werden, um einen besonderen optischen Eindruck zu erzielen. Auch können einzelne Ringelemente mit Drucksensor zum Messen des Unterdrucks im Saugschlauch vorgesehen sein; das Signal des Drucksensors kann zum Beispiel zum Steuern eines Sauggebläses mittelbar oder unmittalbar an die Schlauchleitung angebrachten Sauggebläses herangezogen werden, z.B. bei dem erfindungsgemäßen Staubsauger.

Die Schlauchleitung ist vorzugsweise im Wesentlichen aus einem Kunststoff hergestellt, besonders vorzugsweise us extrudiertem Kunststoff oder alternativ aus spritzgegossenem Kunststoff. Geeignete Kunststoff sind beispielsweise Polyolefine, insbesondere Polypropylen (PP) oder PP-Copolymere, oder Polyamide (PA).

Weiterhin ist bevorzugt, dass die Zungen einstückig an den Profilstrang oder die Ringelemente angeformt sind. Hierdurch kann eine besonders rationelle Fertigung der Schlauchleitung ermöglicht werden. Ferner kann vorteilhafterweise gewährleistet werden, dass das die Zungen nach dem Wickeln oder Zusammenbau in der Schlauchleitung stets an der gewünschten Position angeordnet ist.

Es ist auch von Vorteil, wenn die Zungen in ungespanntem Zustand linear, also nicht im Querschnitt entlang der Erstreckungsrichtung der Schlauchleitung in sich gekrümmt verlaufen. Durch diese Ausbildung kann die Kontaktsituation zwischen den aufeinander treffenden freien Enden der einander gegenüberliegenden Zungen besonders genau bestimmt werden.

Auch ist bevorzugt,die Zungen gegenüber der Längsachse der ungekrümmten Schlauchleitung geneigt auszurichten. Infolge dieser Ausrichtung kann die elastische Vorspannung der aufeinandertreffenden Zungen, insbesondere bei linearer Ausbildung, besonders einfach erzeugt und über einen großen Verformungsweg beibehalten werden.

Es ist ferner von Vorteil, wenn die Zungen von der Längsachse der ungekrümmten Schlauchleitung wegweisend ausgerichtet sind, so dass sie keine in den Strömungskanal ragenden Hindernisse erzeugen.

Fertigungstechnisch besonders einfach ist eine Ausführung, bei welcher die Zungen voneinander wegweisend an den Profilstrang oder die Ringelemente angeformt sind. Dabei ist zur Verringerung des Fertigungs- und Werkzeugaufwands vorzugsweise eine Zunge in den nachfolgend das Wellental der Schlauchleitungen bildenden Bereich auskragend an den Profilstrangs oder die Ringelemente angeformt.

### Kurzbeschreibung der Zeichnungen

Weitere vorteilhafte Ausgestaltungen werden nachfolgend an Hand zweier in den Zeichnungen dargestellten Ausführungsbeispiele, auf welche die Erfindung jedoch nicht beschränkt ist, näher beschrieben.

Es zeigen schematisch:
- Fig. 1: die Darstellung eines erfindungsgemäß ausgestatteten Bodenstaubsaugers;
- Fig. 2: eine zur Verwendung an dem Staubsauger vorgesehene, gewickelte Schlauchleitung nach einer ersten Ausbildung der Erfindung in seitlicher Ansicht (Fig. 2a), in seitlichem Schnitt (Fig. 2b) und in perspektivischer Ansicht (Fig. 2c)
und schließlich
- Fig. 3: eine Variante der in Fig. 2 dargestellten Schlauchleitung.

### Ausführliche Beschreibung anhand von zwei Ausführungsbeispielen

Bei der nachfolgenden Beschreibung von zwei bevorzugten Ausführungsformen der vorliegenden Erfindung bezeichnen gleiche Bezugszeichen gleiche oder vergleichbare Komponenten.

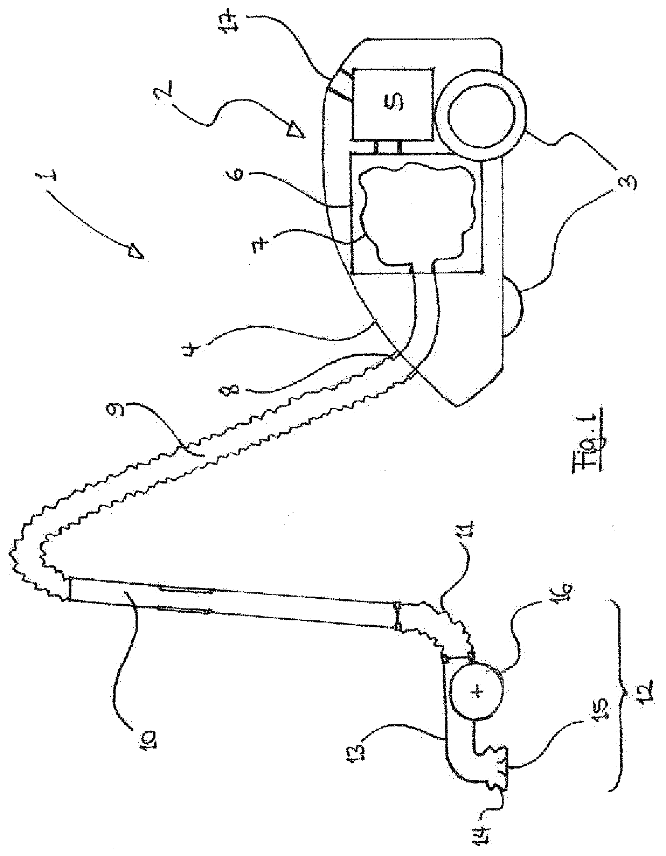

Der in Fig. 1 dargestellte Staubsauger 1 ist als Bodenstaubsauger ausgebildet. Grundsätzlich ist die Erfindung jedoch auch bei anderen Bauformen, beispielsweise einem mit einer flexiblen Saugrohrverlängerung ausgestatteten Stielstaubsauger, mit Vorteil einsetzbar.

Der Staubsauger 1 nach Fig. 1 besteht aus einem gesonderten Aggregateträger 2, welcher mit einem Fahrwerk 3 ausgestattet ist und damit komfortabel über die zu reinigende Bodenfläche bewegt werden kann. Das Gehäuse 4 des Aggregateträgers 2 nimmt insbesondere ein Sauggebläse 5 und eine Staubabscheideeinrichtung 6 in Form eines Staubfilterbeutels 7 auf. Weitere, nicht gezeigt Komponenten des Aggregateträgers sind beispielsweise ein aufwickelbares Stromkabel zur elektrischen Verbindung mit einem Stromnetz, Stelleinrichtungen zum Einschalten und zur Leistungseinstellung, elektronische Regelungseinrichtungen und ein Staufach für Zubehör wie Saugbürsten oder dergleichen.

Stromauf der Staubabscheideeinrichtung 6 ist ein Anschluss 8 zum Anbringen eines biegsamen Saugschlauches 9 vorgesehen, welcher seinerseits mit einem telekopierbaren Schubrohr 10 strömungsverbunden ist. Das Schubrohr 10 ist gedichtet in einen Anschlussstutzen 11 der Saugdüse 12 eingeschoben. Stromauf des gelenkig mit der übrigen Saugdüse 12 verbundenen Anschlussstutzens 11 weist die Saugdüse 12 ferner ein Saugdüsengehäuse 13 und eine über die zu reinigende Bodenfläche zu führende Gleitsohle 14 mit einem Saugmund 15 auf. Die Saugdüse 12 ist ferner mit einer Rollenanordnung 16 zur Abstützung des Schubrohrs 10 versehen.

Beim Reinigungsvorgang liegt die Gleitsohle 14 dichtend an der Bodenfläche an, wobei durch den am Saugmund 15 anliegenden Unterdruck ein Luftstrom angesaugt wird und den auf der Bodenfläche befindlichen Staub mitführt. Der Schmutz führende Luftstrom wird durch das Schubrohr 10 und den Saugschlauch 9 in die Staubabscheideeinrichtung 6 geleitet, wo der Staub im Staubfilterbeutel 7 abgeschieden wird. Der nunmehr gereinigte Luftstrom durchquert das Sauggebläse 5 und wird anschließend durch eine Öffnung 17 im Gehäuse 4 des Aggregateträgers 2 in die Umgebung abgeführt.

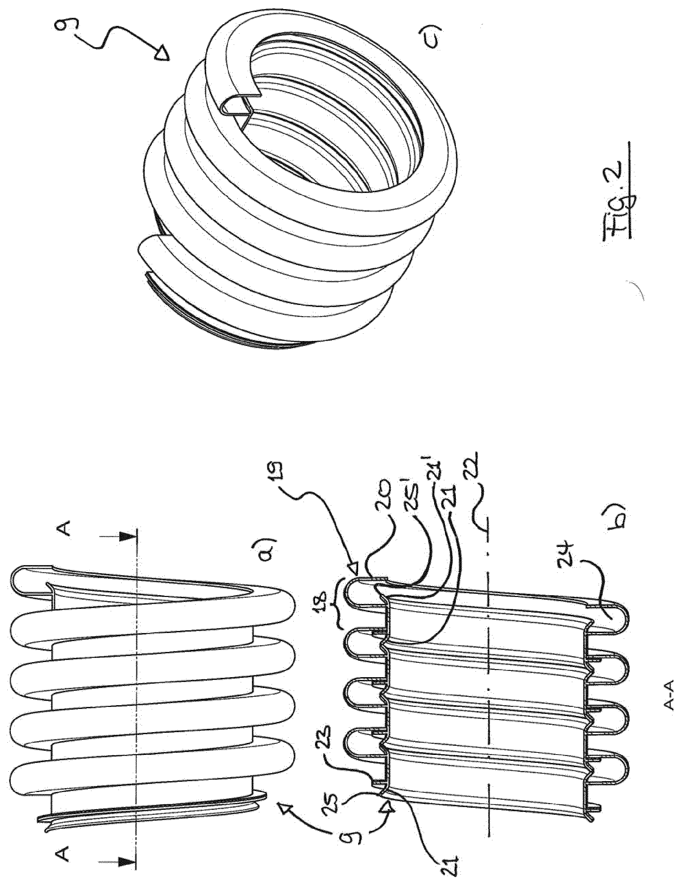

Der in Fig. 2 abgebildete Saugschlauch 9 ist aus einem aus Kunststoff extrudierten Profilstrang 18 helixförmig gewickelt, wobei der Profilstrang 18 im zur Verbindung vorgesehenen Stoßbereich durch Kleben dichtend verbunden ist. Der Profilstrang 18 weist an einem Rand einen U-förmig verlaufenden Bereich 19 mit einem endseitigen Schenkel 20 auf, der senkrecht zur Haupterstreckungsrichtung des Profilstangs 18 verläuft. Der Profilstrang 18 ist mit zwei Zungen 21, 21' versehen, die einstückig an diesen angeformt sind und sich näherungsweise in Haupterstreckungsrichtung des Profilstangs 18 voneinander weg erstrecken. Dabei ragt die erste Zunge 21 aus dem Profilstrang 18 ab, während sich die zweite Zunge 21' in den U-förmig verlaufenden Bereich 19 des Profilstrangs 18 hinein erstreckt. Beide Zungen 21, 21' verlaufen in ungespanntem Zustand jeweils linear, sind also im Ausführungsbeispiel nicht gekrümmt, und sind gegenüber der Haupterstreckungsrichtung des Profilstangs 18 sowie Längsachse 22 des fertigen, ungekrümmten Saugschlauches 9 unter einem Winkel von etwa 45° von der Längsachse 22 wegweisend geneigt. Ferner ist der Profilstrang 18 mit einer einstückig angeformten Lasche 23 ausgestattet, welche senkrecht zur Haupterstreckungsrichtung des Profilstangs 18 von der Längsachse 22 wegweisend ausgerichtet ist.

Bei der Fertigung des Saugschlauchs 9 wird der Profilsstrang 18 schraubenförmig aufgewickelt, wobei der Schenkel 20 einer Windung in Anlage an die Lasche 23 einer benachbarten Windung gelangt und mit dieser mittels Heißklebstoff durch Stoffschluss unlösbar und gasdicht verbunden wird. Der U-förmige Bereich 19 des Profilsstrangs 18 bildet nachfolgend das Wellental 24 des gewellten Saugschlauchs 9 aus, welches von den Zungen 21, 21' mit ihren nunmehr stumpf aufeinander stoßenden freien Enden 25, 25' dichtend überdeckt wird. Die freien Enden 25, 25' der Zungen 21, 21' stehen dabei derart in linienförmigem Kontakt, dass sie entlang ihrer im Wesentlichen gesamten Längserstreckung aufeinander stoßen. Die Neigung der Zungen 21, 21' relativ zu der Längsachse 22 kann sich dabei durch elastische Verformung, vorzugsweise ein Krümmen der Zungen 21, 21' erhöhen, um die gewünschte Vorspannung in der Anlage der freien Enden 25, 25' zu erzeugen. Ferner kann die Vorspannung durch eine elastische Biegung der an sich geradlinig verlaufenden Zungen 21, 21' hervorgerufen werden. Dabei verbleiben die freien Enden 25, 25' in linienförmigem Kontakt.

Durch die aufeinander stoßenden Zungen 21, 21' wird der Saugschlauch 9 innen pneumatisch glatter, wodurch sich der Strömungswiderstand und damit der Druckverlust beim Staubsaugen verringern. Ferner wird der durch Ablagerung von Staub und anderen Verschmutzungen bedrohte Raum im Saugschlauch 9 erheblich verringert. Bei einer Biegung des Saugschlauchs 9 verformt sich zunächst der U-förmige Bereich 19 und damit das Wellental 24, welches insbesondere auf der Innenseite der Krümmung gestaucht wird. Die Außenseite des Schlauchs wird hingegen gestreckt, indem sich das Wellental 24 dort erweitert.

In einer beispielhaften Ausführung der Erfindung spannen sich die Zungen 21, 21' dabei weiter, ohne dass sich die Lage ihrer freien Enden 25, 25' zueinander und damit die Kontaktsituation zwischen den Zungen 21, 21' nennenswert ändert. Insbesondere wird vermieden, dass die Zungen 21, 21' entlang ihrer Flächenseiten aufeinander gleiten. Die Verbreiterung des Wellentals 24 auf der Außenseite der Krümmung wird durch Aufzehren der Vorspannung in den Zungen 21, 21' kompensiert, so dass deren freien Enden 25, 25' weiterhin aufeinander stoßen.

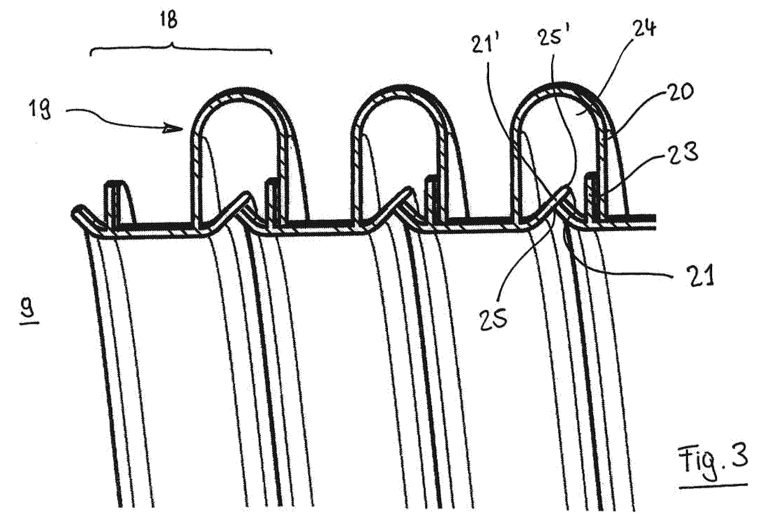

In der in Fig. 3 dargestellten Variante der Schlauchleitung der Fig. 1 stößt die Kante 25 einer Zunge 21 nicht auf die Kante 25' sondern eine Fläche der anderen Zunge 21'. Auch in diesem Fall stehen die Kante 25 der einen Zunge 21 und die Fläche des anderen Zunge 21' in linienförmigem Kontakt. Beim Krümmen der Schlauchleitung kann sich die Kante 25 der einen Zunge 21 auf der Fläche der anderen Zunge 21' verlagern, wobei die beiden Zungen aber jedenfalls aber jedenfalls in linienförmigem Kontakt bleiben.

Mit der Erfindung kann die Barrierewirkung im Wellental 24 verbessert werden, ohne dass die Flexibilität der Schlauchleitung 9 selbst bei stärkerer Biegung nennenswert beeinträchtigt wird. Insbesondere können Staubablagerungen und Geräuschentwicklung entgegengewirkt werden. Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Staubsauger
- 2: Aggregateträger
- 3: Fahrwerk
- 4: Gehäuse
- 5: Sauggebläse
- 6: Staubabscheideeinrichtung
- 7: Staubfilterbeutel
- 8: Anschluss
- 9: Saugschlauch
- 10: Schubrohr
- 11: Anschlussstutzen
- 12: Saugdüse
- 13: Saugdüsengehäuse
- 14: Gleitsohle
- 15: Saugmund
- 16: Rollenanordnung
- 17: Öffnung
- 18: Profilstrang
- 19: Bereich (des Profilstrangs)
- 20: Schenkel
- 21, 21': Zunge
- 22: Längsachse (des Saugschlauchs)
- 23: Lasche
- 24: Wellental
- 25, 25': freies Ende (der Zunge)

## Patentansprüche

1. Schlauchleitung mit einer in Längsrichtung gewellten, innere Wellentäler (24) aufweisenden Wandung, insbesondere zur Verwendung als Saugschlauch (9) an einem Staubsauger (1), wobei im Bereich der inneren Wellentäler (24) zur pneumatischen und/oder hydraulischen Glättung der Schlauchleitung eine Barriere in Form von einander gegenüberliegend in Richtung des Wellentals (24) auskragenden und das Wellental (24) überdeckenden Zungen (21, 21') vorgesehen ist,
**dadurch gekennzeichnet, dass**
die Zungen (21, 21') unter elastischer Vorspannung stumpf aufeinander stoßend ausgebildet sind.

2. Schlauchleitung nach Anspruch 1, **dadurch gekennzeichnet, dass** die Schlauchleitung aus einem helixförmig gewickelten Profilstrang (18) besteht.

3. Schlauchleitung nach Anspruch 2, **dadurch gekennzeichnet, dass** die Zungen (21, 21') einstückig an den Profilstrang (18) oder die Ringelemente (26) angeformt sind.

4. Schlauchleitung nach Anspruch 2 oder 3, **dadurch gekennzeichnet, dass** der Profilstrang (18) einen Schenkel (20) und eine Lasche (23) aufweist, wobei der Schenkel (20) einer Windung sich mit der Lasche (23) einer benachbarten Windung in Anlage befindet und mit dieser fest verbunden ist.

5. Schlauchleitung nach einem der vorhergehenden Ansprüche, **dadurch gekennzeichnet, dass** die Zungen (21, 21') in ungespanntem Zustand jeweils linear verlaufen.

6. Schlauchleitung nach einem der vorhergehenden Ansprüche, **dadurch gekennzeichnet, dass** die Zungen (21, 21') gegenüber der Längsachse (22) der ungekrümmten Schlauchleitung geneigt ausgerichtet sind.

7. Schlauchleitung nach einem der vorhergehenden Ansprüche, **dadurch gekennzeichnet, dass** die Zungen (21, 21') von der Längsachse (22) der ungekrümmten Schlauchleitung wegweisend ausgerichtet sind.

8. Schlauchleitung nach einem der vorhergehenden Ansprüche, **dadurch gekennzeichnet, dass** die Zungen (21, 21') voneinander wegweisend an den Profilstrang (18) oder die Ringelemente (26) angeformt sind.

9. Schlauchleitung nach einem der vorhergehenden Ansprüche, **dadurch gekennzeichnet, dass** eine Zunge (21') in den nachfolgend das Wellental (24) der Schlauchleitungen bildenden Bereich (19) auskragend an den Profilstrangs (18) oder das Ringelement (26) angeformt ist.

10. Staubsauger (1) mit einer als Saugschlauch (9) dienenden Schlauchleitung nach einem der vorhergehenden Ansprüche.

## Claims

1. Hose with a wall having an inner wave trough (24) which is waved in the longitudinal direction, in particular for use as a suction hose (9) on a vacuum cleaner (1), wherein provision is made in the region of the inner wave trough (24) for the pneumatic and/or hydraulic smoothing of the hose for a barrier in the form of tongues (21, 21') which project opposite to one another in the direction of the wave trough (24) and cover the wave trough (24),
**characterised in that**
the tongues (21, 21') are embodied to bluntly strike one another under elastic pretensioning.

2. Hose according to claim 1, **characterised in that** the hose consists of a helically wound profiled strip (18).

3. Hose according to claim 2, **characterised in that** the tongues (21, 21') are moulded in one piece on the profiled strip (18) or the annular elements (26).

4. Hose according to claim 2 or 3, **characterised in that** the profiled strip (18) has a limb (20) and a strap (23), wherein the limb (20) of a winding is attached to the strap (23) of an adjacent winding and is firmly connected hereto.

5. Hose according to one of the preceding claims, **characterised in that** the tongues (21, 21') run linearly in each case in the tension-free state.

6. Hose according to one of the preceding claims, **characterised in that** the tongues (21, 21') are aligned inclined towards the longitudinal axis (22) of the non-curved hose.

7. Hose according to one of the preceding claims, **characterised in that** the tongues (21, 21') are aligned pointing away from the longitudinal axis (22) of the non-curved hose.

8. Hose according to one of the preceding claims, **characterised in that** the tongues (21, 21') are moulded on the profiled strip (18) or the annular elements (26) so as to point away from one another.

9. Hose according to one of the preceding claims, **characterised in that** in the region (19) subsequently forming the wave trough (24) of the hoses, the tongue (21') is moulded in a projecting manner on the profiled strip (18) or the annular element (26).

10. Vacuum cleaner (1) having a hose which serves as a suction hose (9) according to one of the preceding claims.

## Revendications

1. Tuyau flexible avec une paroi annelée dans le sens longitudinal et présentant des creux de vague intérieurs (24), en particulier pour une utilisation sous forme de tuyau flexible d'aspiration (9) sur un aspirateur (1), dans lequel une barrière sous la forme de languettes (21, 21') opposées les unes aux autres, en saillie dans le sens du creux de vague (24) et recouvrant le creux de vague (24) est prévue dans la zone des creux de vague intérieurs (24) pour le lissage pneumatique et/ou hydraulique du tuyau flexible, **caractérisé en ce que** les languettes (21, 21') sont exécutées de manière contigüe bout à bout sous une précontrainte élastique.

2. Tuyau flexible selon la revendication 1, **caractérisé en ce que** le tuyau flexible se compose d'un tronçon de profilé hélicoïdal enroulé (18).

3. Tuyau flexible selon la revendication 2, **caractérisé en ce que** les languettes (21, 21') sont formées en une pièce sur le tronçon de profilé (18) ou les éléments annulaires (26).

4. Tuyau flexible selon la revendication 2 ou 3, **caractérisé en ce que** le tronçon de profilé (18) présente un côté (20) et une bride (23), le côté (20) d'une spire étant en lien avec la bride (23) d'une spire voisine et fermement reliée à elle.

5. Tuyau flexible selon l'une des revendications précédentes, **caractérisé en ce que** les languettes (21, 21') s'étendent respectivement linéairement à l'état détendu.

6. Tuyau flexible selon l'une des revendications précédentes, **caractérisé en ce que** les languettes (21, 21') sont dirigées de manière inclinée par rapport à l'axe longitudinal (22) du tuyau flexible non courbé.

7. Tuyau flexible selon l'une des revendications précédentes, **caractérisé en ce que** les languettes (21, 21') sont dirigées à l'opposé de l'axe longitudinal (22) du tuyau flexible non courbé.

8. Tuyau flexible selon l'une des revendications précédentes, **caractérisé en ce que** les languettes (21, 21') sont formées de manière opposée l'une à l'autre sur le tronçon de profilé (18) ou les éléments annulaires (26).

9. Tuyau flexible selon l'une des revendications précédentes, **caractérisé en ce qu'**une languette (21') est formée sur le tronçon de profilé (18) ou l'élément annulaire (26) en saillie dans la zone (19) suivante constituant le creux de vague (24) des tuyaux flexibles.

10. Aspirateur (1) avec un tuyau flexible servant de tuyau flexible d'aspiration (9) selon l'une des revendications précédentes.
